# EUROPEAN PATENT APPLICATION

(11) **EP 2 985 480 A1**
(43) Date of publication of application: **17.02.2016**
(21) Application number: 15178330.5
(22) Date of filing: 24.07.2015
(51) Int. Cl.: F16C 33/80, F16C 33/78, F16C 19/18

(54) **HUB BEARING UNIT, IN PARTICULAR FOR AGRICULTURAL MACHINERY AND MOUNTING DEVICE**

(30) Priority: 01.08.2014 IT TO20140616
(71) Applicant: Aktiebolaget SKF, 415 50 Göteborg (SE)
(72) Inventor: CIULLA, Luca, I-10137 Torino (IT); MALDERA, Carlo, I-10094 Giaveno (TO) (IT)
(74) Representative: Tedeschini, Luca

(57) **Abstract**

A hub bearing unit (1) comprising an outer ring (3); an inner ring (6) rotating about a common symmetry axis (A) of the outer ring and of the inner ring; a flange (4) which extends radially from the outer ring (3); a plurality of rolling bodies (7) interposed between the outer ring and the inner ring; a sealing assembly (8) and a protective shield (10) for the sealing assembly (8), arranged on the side opposite to the flange (4); wherein the protective shield (10) is constituted by a metal sheet and comprises a cylindrical portion (14) which can be mounted integral with a stationary axle (2), and a flange portion (15), which extends radially on the outside of the cylindrical portion (14), facing the sealing assembly (8), from a first end (16) of the cylindrical portion (14) opposite to the flange (4) of the outer ring (3); a second end (23) of the cylindrical portion (14) is provided radially inwards with an L-fold (24) which delimits an annular axial shoulder (26) cooperating in abutment with the inner ring (6).

## Description

### Technical field of the invention

The present invention relates to a hub bearing unit, in particular specifically designed to be mounted on the axle of a piece of agricultural machinery, for example a tractor or an implement or accessory thereof; the hub bearing unit can be designed to generally support a rotating tool for working the soil, but also a vehicle wheel, and in any case is conceived to operate in an environment full of even large contaminants, therefore not only water, soil and mud, but also gravel and stones.

The invention also relates to a device for mounting a tool or wheel which uses the hub bearing unit.

### Prior art

A hub bearing unit for an agricultural vehicle is known from US8328428B2, comprising: an outer ring; a flange which extends radially on the outside from a first end of the outer ring; an inner ring, arranged coaxial with the outer ring and within it and adapted to be mounted on an axle of a piece of agricultural machinery or on an agricultural vehicle; rolling bodies interposed between the inner and outer rings to operatively connect the inner ring to the outer ring; a sealing assembly arranged on the side opposite to the flange, accommodated within a second end of the outer ring, opposite to the first end, or in an annular axial extension element of the outer ring, secured integral with the outer ring; and a protective shield arranged facing the sealing assembly, on the side opposite to the first end of the outer ring. The protective shield is made of a rigid material, for example of a synthetic plastic material, and serves on one hand to exert a labyrinth seal action towards contaminants outside the outer ring, in addition to the one exerted by the sealing assembly; and on the other hand, to protect the sealing assembly from any large contaminants, such as gravel or stones. The inner ring, which is generally made in the shape of two separate rings adjacent to one another, and the protective shield are integrally mounted in use on the stationary axle of the agricultural vehicle and locked axially against a shoulder of the axle by means of a nut mounted on a free threaded end of the axle, opposite to the shoulder.

Although entirely valid and satisfactory, the known solution has an axial volume which can be excessive in certain applications. In particular, the excessive axial volume is caused by the protective shield, which has a massive construction and is defined in practice by a ring arranged adjacent to the inner ring and having substantially the same radial thickness as the inner ring which is provided, on the side opposite to the first end of the outer ring, with a flange which extends facing the sealing assembly, on the outside of the outer ring and which cooperates with the outer ring or with an extension thereof, thus forming the labyrinth seal indicated.

In fact, to allow the proper axial position of the protective shield, there is a need for the protective shield to be able of cooperating in abutment with the inner ring.

### Summary of the invention

It is the object of the prevent invention to provide a hub bearing unit of the type described, and a mounting device for a rotating tool or a vehicle wheel using a hub bearing unit of the type described, which however do not have the drawback described and are in particular compact, easy and affordable to manufacture and mount and are reliable.

Therefore, on the basis of the invention, a hub bearing unit and a mounting device comprising such a hub bearing unit are provided for a rotating tool or a vehicle wheel, as defined in the appended claims.

According to the invention, the protective shield is made by means of a folded, sheared metal sheet which is able to interact in abutment with the inner ring by means of an end L-fold of a frontal edge thereof facing towards the inner ring. Thereby, a compact, affordable solution is obtained which is easy to manufacture and mount.

### Brief description of the drawings

The present invention will now be described with reference to the accompanying drawings, which illustrate a non-limiting embodiment thereof, in which:

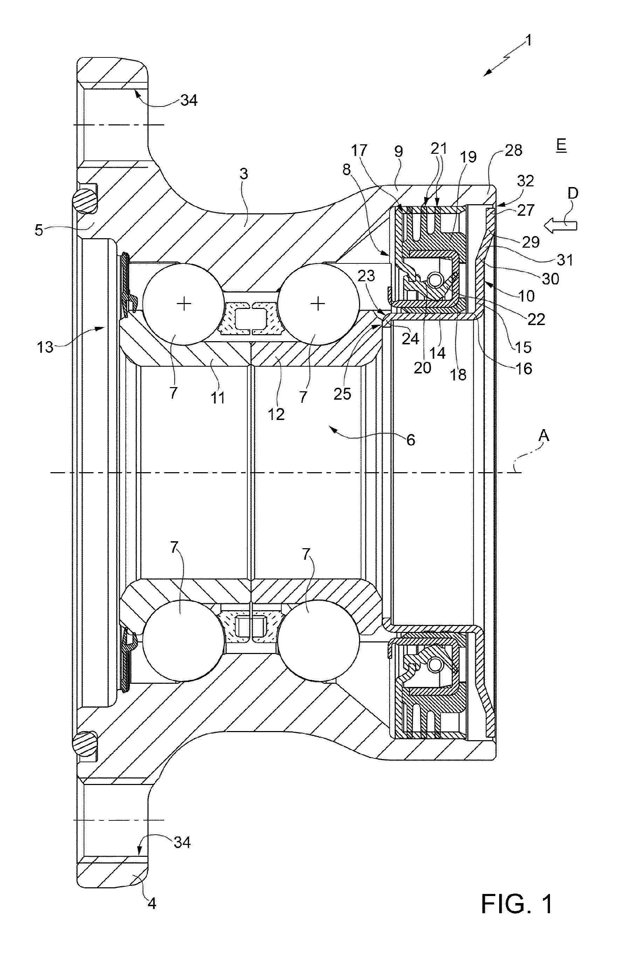

- figure 1 diagrammatically illustrates an elevated sectional view according to a radial plane, of a hub bearing unit made according to the invention;
- figure 2 illustrates a detail of the hub bearing unit in figure 1 on enlarged scale, mounted on an axle of a piece of agricultural machinery, known and not illustrated for simplicity, to form a mounting device for a rotating implement or a vehicle wheel; and
- figure 3 illustrates a detail in figure 2, on further enlarged scale.

### Detailed description

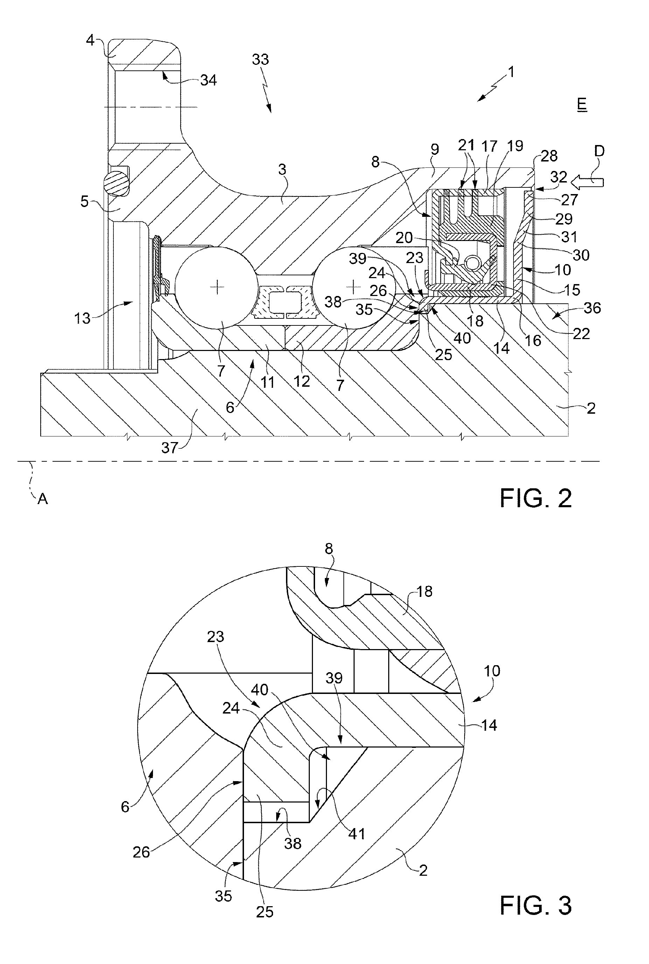

With reference to figures from 1 to 3, numeral 1 indicates a hub bearing unit as a whole, intended, and designed for such a purpose, to equip an axle 2 (figure 2), in use stationary, of a piece of agricultural machinery, for example a tractor or tool or accessory, which can be mounted for example on a tractor.

The hub bearing unit 1 comprises: an outer ring 3; a receiving flange 4, which extends radially on the outside from a first end 5 of the outer ring 3 and which is adapted to receive a tool or implement or vehicle wheel in use, known and not illustrated for simplicity; an inner ring 6, arranged within the outer ring 3; rolling bodies 7 interposed between the inner 6 and outer 3 rings to operatively connect the inner ring 6 to the outer ring 3 so that the outer ring 3 is free to rotate, with respect to the inner ring 6, about a common symmetry axis A of the inner 6 and outer 3 rings and of the whole hub bearing unit 1; a sealing assembly 8, arranged on the side opposite to the receiving flange 4 and integrally carried by a second end 9 of the outer ring 3, opposite to the first end 5; and a protective shield 10, arranged facing the sealing assembly 8, on the side opposite to the first end 5.

The inner ring 6 is adapted to be mounted integral with the axle 2 in use and, in the example illustrated, consists of two separate symmetrical rings 11, 12 adjacent to each another. The outer ring 3 provided with flange 4 forms a fixing hub for a tool or wheel, as already indicated, and forms a rolling bearing 13 together with the inner ring 3 and the rolling bodies 7, formed by two crowns of balls in the example illustrated, one crown for each ring 11, 12.

According to a first aspect of the invention, the protective shield 10 is constituted by a folded, sheared metal sheet, for example steel, and comprises a sleeve-shaped cylindrical mounting portion 14 adapted to be mounted, in use, integral with the stationary axle 2 together with the inner ring 6, and a flange-shaped radial portion 15, which extends radially on the outside of the cylindrical mounting portion 14 starting from a first end 16 of the cylindrical mounting portion 14; end 16 is opposite to the first end 5 of the outer ring 3.

Having been obtained by folding and shearing a single and same metal sheet, the flange portion 15 and the cylindrical mounting portion 14 of the protective shield 10 have substantially the same thickness, measured in axial direction for the flange portion 15, i.e. parallel to axis A, and in radial direction for the cylindrical portion 14, i.e. perpendicular to axis A.

The sealing assembly 8, of a type known in the art for the specific application, is radially driven on the outside of the cylindrical mounting portion 14 of the protective shield 10, with the flange portion 15 of the protective shield 10 axially interposed between the sealing assembly 8 and an environment external to the outer ring 3, indicated as a whole with E.

In particular, the sealing assembly 8 is constituted by a cassette type seal comprising a first metal annular screen 17 and a second metal annular screen 18 integrally carried by the outer ring 3 and by the cylindrical mounting portion 14 of the protective shield 10, respectively, for example driven thereon with interference. Each screen 17, 18 integrally carries an elastomeric sealing element, respectively indicated by 19 and 20, each provided with at least one annular sealing lip, the elastomeric element 19 carried by screen 17 having three lips 21 and the elastomeric element 20 carried by screen 18 having one V lip 22, respectively, lips which cooperate, preferably in sliding manner, on the other of the screens 17, 18, in the case in point the three lips 21 cooperate with screen 17 and lip 22 cooperates with screen 18.

It is worth noting that in the accompanying drawings, the sealing lips 21, 22, which are normally sliding, are depicted in their undeformed condition and therefore interfering with the screens 17 and 18.

According to another aspect of the invention, in combination with that already indicated, the cylindrical mounting portion 14 of the protective shield 10 has a second end 23, opposite to the first end 16 and facing toward flange 4 of the outer ring 3, which second end 23 is provided with a radially inner L-shaped end fold 24, which defines a frontal edge 25 of the protective shield 10 facing towards the inner ring 6; the L-fold 24, with the frontal edge 25 defined thereby, delimits an annular axial shoulder 26 (figures 2 and 3) of the protective shield 10 cooperating in axial abutment with the inner ring 6, on the side opposite to end 16..

In the example illustrated, the sealing assembly 8 is housed driven into end 9 of the outer ring 3, which extends axially and overhangingly with respect to the inner ring 6 and is shaped like a cylindrical sleeve which accommodates both the sealing assembly 8 and the protective shield 10.

According to a possible variant not illustrated for simplicity, a similar result could be obtained if the outer ring 3 had the same axial length as the inner ring 6 and an annular axial extension element of the outer ring 3 was applied on end 9, the element defined by an applied housing sleeve for the sealing assembly 8 and shield 10, such as for example illustrated in US8328428.

A radially outer edge 27 of the flange portion 15 of the protective shield 10 cooperates with the outer ring 3, in the case in point with a frontal edge 28 of end 9, to define a labyrinth seal 32 therewith arranged upstream of the sealing assembly 10 with reference to a source direction D of external contaminants in use and defined by the radial gap between the edges 27 and 28.

In the preferred embodiment illustrated, the radially outer edge 27 of the flange portion 15 is arranged substantially flush with a frontal edge 28 of end 9 of the outer ring 3, edge 28 facing the side opposite to the receiving flange 5.

In any case, the radially outer edge 27 of the flange portion 15 is to be arranged axially between the sealing assembly 8 and the frontal edge 28 of end 8, therefore for example it can be arranged not flush with edge 28, however within end 9.

According to another aspect of the invention, the flange portion 15 of the protective shield 10 has a pair of opposite L-folds 29 and 30 between a radially outer edge 27 thereof and the first end 16 of the cylindrical mounting portion 14, which L-folds are made so that the radially outer edge 27 of the flange portion 15 is arranged axially offset with respect to end 16 of the cylindrical portion 14 and in particular displaced towards the outside of the outer ring 3 with respect to end 16.

The two opposite L-folds 29 and 30 of the flange portion 15 delimit a middle annular stretch 31 of the flange portion 15 having a truncated cone-shape and forming, with the symmetry axis A of the rings 3, 6, an angle with vertex facing towards the receiving flange 4; therefore the truncated cone-shape portion 31 of flange 15 has a "tapering" facing towards flange 4.

On the basis of the above description, it is apparent that once the hub bearing unit 1 is coupled on the stationary axle 2, these two components together form a mounting device, indicated as a whole by 33 in figure 2, for a rotating tool or implement, for example a disc for working the soil, or for a vehicle wheel, which are known and are not illustrated for simplicity, which are mounted integrally on flange 4, for example by means of screws (not illustrated) which are coupled with respective axial threaded holes 34 made to pass through flange 4.

The mounting device 33 is therefore characterized in that it comprises a hub bearing unit 1 and an axle 2 stationary in use on which the inner ring 6 (that is, the two rings 11, 12 forming the inner ring 6) and the protective shield 10 are integrally mounted, with the sealing assembly 8 mounted facing between the outer ring 3 and the cylindrical mounting portion 14 of the protective shield 10.

Axle 2 is provided in device 33 towards the receiving flange 4 (figures 2 and 3) with a first axial shoulder 35 defined by a variation of diameter between a first stretch 36 of axle 2, of greater diameter, distal from the receiving flange 4, and a second stretch 37 of axle 2, of smaller diameter, vicinal to the receiving flange 4; axle 2 is further provided with an annular groove 38 obtained on a radially outer edge 39 of the first axial shoulder 35 and which defines a radially outermost second axial shoulder 40 towards the first axial shoulder 35; the L-fold 24 of end 23 of the cylindrical mounting portion 14 of the protective shield 10 is inserted within the annular groove 38 (figure 3), sandwiched between the inner ring 6 (in the case in point the component ring 12) and the second axial shoulder 40, while the inner ring 6 is arranged in axial abutment against the first axial shoulder 35.

The annular groove 38 defines the second axial shoulder 40 forming, between the first 36 and second stretches 37 of axle 2 and at the first axial shoulder 35, an annular step 41 which is either perpendicular or oblique to the symmetry axis A of the inner 6 and outer 3 rings.

In the example illustrated, step 41 is cut oblique and therefore also the corresponding axial shoulder 40 is oblique, with respect to axis A, in particular with beveling or tapering on the part of flange 4. According to a variant not illustrated for simplicity, step 41 can however also be cut perpendicular to axis A, in which case shoulder 40 is arranged perpendicular to axis A.

In both cases, shoulder 40 is equally effective for locking the protective shield 10 in a proper axial position, while at the same time allowing easy positioning and insertion of axle 2 into the hub bearing unit 1, while the two L-folds 29, 30 of the flange portion 15, with the relative truncated cone-shape stretch 31, reinforce the flange portion 15 of the protective shield 10 and allow the radial gap forming the labyrinth seal 29 to be more accurately defined.

All the objects of the invention are therefore achieved.

## Claims

1. A hub bearing unit (1), designed to be mounted on an axle (2), stationary in use, of a piece of machinery, in particular an axle of a piece of agricultural machinery, comprising: an outer ring (3); a receiving flange (4), which extends radially on the outside from a first end (5) of the outer ring and which is adapted to receive a tool or a vehicle wheel in use; an inner ring (6), arranged within the outer ring (3), the inner ring (6) being adapted to be mounted integral with the axle (2) in use; rolling bodies (7), interposed between inner and outer rings (6,3) to operatively connect the inner ring to the outer ring so that the outer ring (3) is free to rotate about a common symmetry axis (A) of the inner and outer rings; a sealing assembly (8), arranged on the side opposite to the receiving flange (4) and integrally carried by a second end (9) of the outer ring, opposite to the first end; and a protective shield (10), arranged facing the sealing assembly (8), on the side opposite to the first end (5) of the outer ring;
wherein, in combination:
i) the protective shield (10) comprises a cylindrical mounting portion (14) adapted to be mounted, in use, integral with the stationary axle (2), and a flange portion (15), which extends radially on the outside of the cylindrical mounting portion starting from a first end (16) of the cylindrical mounting portion opposite to first end (5) of the outer ring;
ii) the flange portion (15) and the cylindrical mounting portion (14) of the protective shield have substantially the same thickness, measured in axial direction for the flange portion and in radial direction for the cylindrical portion;
iii) the sealing assembly (8) is radially driven on the outside of the cylindrical mounting portion (14) of the protective shield, with the flange portion (15) of the protective shield axially interposed between the sealing assembly (8) and an environment (E) external to the outer ring; **characterized in that**
iv) the protective shield (10) is constituted by a folded, sheared metal sheet and
v) the cylindrical mounting portion (14) of the protective shield (10) has a second end (23), opposite to the first end (16) and facing toward the receiving flange (4) of the outer ring (3), which second end (23) of the cylindrical mounting portion (14) is provided with a radially inner L-shaped end fold (24), which defines a frontal edge (25), facing the inner ring (6), of the protective shield (10), the L-fold (24) delimiting an annular axial shoulder (26) of the protective shield (10) cooperating in axial abutment with the inner ring (6) on the side opposite to the first end (16).

2. A hub bearing unit (1) according to claim 1, **characterized in that** the sealing assembly (8) is housed driven into the second end (9) of the outer ring, which extends axially and overhangingly with respect to the inner ring (6).

3. A hub bearing unit (1) according to claim 1 or 2, **characterized in that** a radially outer edge (27) of the flange portion (15) of the protective shield cooperates with the outer ring (3) to define a labyrinth seal (29) therewith arranged upstream of the sealing assembly (8) with reference to a source direction (D) of external contaminants in use.

4. A hub bearing unit (1) according to claim 3, **characterized in that** the radially outer edge (27) of the flange portion (15) of the protective shield is arranged substantially flush with a frontal edge (28) of the second end (9) of the outer ring (3) facing the side opposite to the receiving flange (4).

5. A hub bearing unit (1) according to claim 3 or 4, **characterized in that** the radially outer edge (27) of the flange portion (15) of the protective shield is axially arranged between the sealing assembly (8) and a frontal edge (28) of the second end (9) of the outer ring (3) facing the side opposite to the receiving flange (4).

6. A hub bearing unit (1) according to any one of the preceding claims, **characterized in that** the flange portion (15) of the protective shield (10) has a pair of opposite L-folds (29,30) arranged between a radially outer edge (27) thereof and the first end (16) of the cylindrical mounting portion (14), which L-folds are made so that the radially outer edge (27) of the flange portion (15) is arranged axially offset with respect to the first end (16) of the cylindrical portion (15) and displaced towards the outside of the outer ring (3).

7. A hub bearing unit (1) according to claim 6, **characterized in that** the two opposite L-folds (29,30) of the flange portion (15) of the protective shield (10) delimit a middle annular stretch (31) of the flange portion having a truncated cone-shape and forming, with the symmetry axis (A) of the inner and outer rings, an angle with vertex facing towards the receiving flange (4).

8. A hub bearing unit (1) according to any one of the preceding claims, **characterized in that** the sealing assembly (8) is constituted by a cassette type seal comprising a first (17) and a second (18) annular screen integrally carried by the outer ring (3) and by the cylindrical mounting portion (14) of the protective shield (10), respectively, each of which integrally carries an elastomeric sealing element (19,20) provided with at least one annular sealing lip (21,22) which cooperates, preferably in sliding manner, on the other of the first and second screens (17,18).

9. A mounting device (33) for a rotating tool or a vehicle wheel, comprising an outer ring (3); a receiving flange (4), which extends radially on the outside from a first end (5) of the outer ring and which is adapted to receive a tool or a vehicle wheel in use; an inner ring (6), arranged within the outer ring (3); rolling bodies (7), interposed between inner and outer rings (6,3) to operatively connect the inner ring to the outer ring so that the outer ring (3) is free to rotate about a common symmetry axis (A) of the inner and outer rings; a sealing assembly (8), arranged on the side opposite to the receiving flange (4) and integrally carried by a second end (9) of the outer ring, opposite to the first end; and a protective shield (10), arranged facing the sealing assembly (8), on the side opposite to the first end (5) of the outer ring; and an axle (2) stationary in use on which the inner ring (6) and the protective shield (10) are integrally mounted, with the sealing assembly (8) mounted between the outer ring (3) and the cylindrical mounting portion (14) of the protective shield (10); wherein the protective shield (10) comprises a cylindrical mounting portion (14) adapted to be mounted, in use, integral with the stationary axle (2), and a flange portion (15), which extends radially on the outside of the cylindrical mounting portion starting from a first end (16) of the cylindrical mounting portion opposite to first end (5) of the outer ring; the sealing assembly (8) being radially driven on the outside of the cylindrical mounting portion (14) of the protective shield, with the flange portion (15) of the protective shield axially interposed between the sealing assembly (8) and an environment (E) external to the outer ring; **characterized in that**
- the protective shield (10) is constituted by a folded, sheared metal sheet; and
- the cylindrical mounting portion (14) of the protective shield (10) has a second end (23), opposite to the first end (16) and facing toward the receiving flange (4) of the outer ring (3), which second end (23) of the cylindrical mounting portion (14) is provided with a radially inner L-shaped end fold (24), which defines a frontal edge (25), facing the inner ring (6), of the protective shield (10), the L-fold (24) delimiting an annular axial shoulder (26) of the protective shield (10) cooperating in axial abutment with the inner ring (6) on the side opposite to the first end (16); the axle (2) being provided towards the receiving flange (4) with a first axial shoulder (35) defined by a variation of diameter between a first stretch of the axle (36), of greater diameter, distal from the receiving flange (4), and a second stretch (37) of the axle (2), of smaller diameter, vicinal to the receiving flange (4); and wherein the axle (2) is further provided with an annular groove (38) obtained on a radially outer edge (39) of the first axial shoulder (35) and which defines a radially outermost second axial shoulder (40) towards the first axial shoulder; the L-fold (24) of the second end (23) of the cylindrical mounting portion (14) of the protective shield (10) being sandwiched within the annular groove (38) between the inner ring (6) and the second axial shoulder (40), the inner ring (6) being arranged in abutment against the first axial shoulder (35).

10. A mounting device (33) according to claim 9, **characterized in that** the annular groove (38) defines the second axial shoulder (40) forming, between the first and second stretches (36,37) of the axle (2) and at the first axial shoulder (35), an annular step (41) either perpendicular or oblique to the symmetry axis (A) of the inner and outer rings (6,3).
